# EUROPÄISCHE PATENTSCHRIFT

(11) **EP 1 377 528 B1**
(45) Veröffentlichungstag und Bekanntmachung des Hinweises auf die Patenterteilung: **22.06.2005**
(21) Anmeldenummer: 02748654.7
(22) Anmeldetag: 09.04.2002
(51) Int. Cl.: C03B 23/025, C03B 29/02

(54) **VERFAHREN UND VORRICHTUNG ZUM UMFORMEN VON GLÄSERN UND/ODER GLASKERAMIKEN**
METHOD AND DEVICE FOR THE FORMING OF GLASSES AND/OR GLASS CERAMICS
PROCEDE ET UN DISPOSITIF POUR FA ONNER DES VERRES ET/OU DES VITROCERAMIQUES

(30) Priorität: 11.04.2001 DE 10118260
(43) Veröffentlichungstag der Anmeldung: 07.01.2004
(73) Patentinhaber: SCHOTT AG, 55122 Mainz (DE)
(72) Erfinder: FOTHERINGHAM, Ulrich, 65191 Wiesbaden (DE); ESEMANN, Hauke, 55286 Wörrstadt (DE); HOPPE, Bernd, 55218 Ingelheim (DE); HIRSCH, Andreas, 55218 Ingelheim (DE); WEIDMANN, Dirk, 55130 Mainz (DE); JOHANSSON, Thoralf, 55268 Nieder-Olm (DE)
(74) Vertreter: Dr. Weitzel & Partner
(86) Internationale Anmeldenummer: PCT/EP2002/003924
(87) Internationale Veröffentlichungsnummer: WO 2002/088037

(56) Entgegenhaltungen:
- EP-A- 0 279 674
- DE-A- 19 938 807
- DE-A- 19 938 808
- DE-A- 19 938 811
- DE-B- 2 834 867
- DE-U- 29 905 385
- US-A- 4 140 512
- US-A- 4 921 519

## Beschreibung

Die Erfindung betrifft ein Verfahren und eine Vorrichtung zur Umformung von Gläsern und/oder Glaskeramiken, insbesondere auch Ausgangsgläsern zur Herstellung von Glaskeramiken, mit Hilfe kurzwelliger Infrarotstrahlung. Ein solches Erwärmungs- beziehungsweise Umformverfahren ist ausführlich in DE 199 38 808 A1, DE 199 38 807 A1 und DE 199 38 811 A1 beschrieben. Das hierbei entstehende Endprodukt ist ein dreidimensional verformter Körper, beispielsweise eine Backform, ein Waschbecken oder eine Dunstabzugshaube für Küchen. Dabei werden dreidimensional verformte Körper der genannten Art, beispielsweise aus Flachglas, durch Umformen erzeugt. Je nach Gestalt des dreidimensionalen Körpers ist der Grad der Umformung - in einer Schnittansicht durch den dreidimensionalen Körper gesehen - unterschiedlich groß. Siehe beispielsweise eine Backform mit einer Backmulde, deren Kontur eine ebene Bodenfläche, eine geneigte Umfangswand und wiederum eine ebene Randfläche aufweist. Der Umformungsgrad zwischen Boden und Umfangswand sowie zwischen Umfangswand und Randfläche ist relativ hoch.

DE 199 38 811 A1 beschreibt eine Vorrichtung zum Herstellen von Glaskeramikteilen mittels Verformung aus einem Glaskeramikrohling. Dort sind die Wände eines Strahlungs-Hohlraumes derart gestaltet, daß sie IR-Strahlen reflektieren. Das gleiche ist der Fall bei den Vorrichtungen gemäß DE 199 38 808 A1, EP 0 133 847 B1 und US 4 789 771 A1.

Es ist ferner bekannt, zur Umformung von Glas Stahlformen zu verwenden, beispielsweise aus RGM-17. Ein solches Material ist geeignet, solange die Erwärmung des Glases entweder außerhalb der Form oder mittels konventioneller Strahlungsbeheizung (zum Beispiel Kanthalelemente) oder Gasflammenbeheizung erfolgt. Verwendet man zur Erwärmung des auf der Form aufliegenden Glases jedoch kurzwellige IR-Strahlung, für die das Glas weitgehend transparent ist, so durchdringt ein Großteil der auftreffenden Strahlung das Glas und gelangt auf die stählerne Form, die aufgrund ihrer geringen Reflektivität einen erheblichen Teil der auftreffenden Strahlungsenergie absorbiert und sich entsprechend aufheizt. Dies führt sehr schnell zum Verkleben des Glases mit der Form und bei weiterer Erwärmung zum Verzundern der Form. Somit ist eine Form aus Stahl zur Verfomung mittels Erwärmung durch kurzwellige Infrarotstrahlung nicht ohne weiteres geeignet.

Der Erfindung liegt die Aufgabe zugrunde, ein Verfahren und eine Vorrichtung der eingangs genannten Art derart zu gestalten, daß hiermit Körper aus Glas oder Glaskeramik in einer Form mittels kurzwelliger IR-Strahlung beheizt und umgeformt werden können, ohne daß es zu einem Ankleben des Körpers an der Form beziehungsweise zu einem Verzundern der Form kommt.

Diese Aufgabe wird durch die Merkmale der unabhängigen Ansprüche gelöst.

Als Material für die Form kommt ein entsprechendes Metall hoher Reflektivität in Betracht, beispielsweise poliertes Aluminium. Es kann aber auch ein anderes Metall verwendet werden, beispielsweise Kupfer, das mit einem entsprechenden Material hoher Reflektivität beschichtet ist, so daß die Schicht die formgebende Fläche bildet. Die Schicht sollte eine Reflektivität von über 80 % haben, besser 90 %, und insbesondere 95 %. Hiermit lassen sich die genannten Nachteile des Anklebens des Körpers aus Glas oder Glaskeramik sowie des Verzundems der Form aufgrund zu starker Erwärmung vermeiden.

Gemäß der Erfindung wird somit das Material der Form zum Ausformen des Endproduktes entsprechend gestaltet, daß es einen hohen Remissionsgrad beziehungweise eine hohe Reflektivität aufweist. Bei dem eingangs genannten Stand der Technik, vor allem bei DE 199 38 811 A1 geht es um etwas anderes. Nicht die Wände einer Form zum Ausformen sind dort reflektierend, sondern die Wände eines Strahlungs-Hohlraumes.

Für viele Anwendungszwecke kommen Formen aus Aluminium oder Kupfer in Betracht. Als Beschichtungsmaterial kann beispielsweise Gold verwendet werden, das zum Beispiel galvanisch oder durch Bedampfen auf das Substrat aufgebracht werden kann. Die formgebende Fläche kann poliert werden.

Grundsätzlich kommen auch Formen aus Quarzgut mit hohem Remissionsgrad in Betracht, vorzugsweise über 90 %, besser noch über 95 %. Eine solche Keramikform besitzt den Nachteil, daß die Herstellung sehr glatter dreidimensional geformter Flächen mit sehr hohem Aufwand verbunden ist und in keinem Fall mit einer Qualität gelingt, wie sie bei der Metallbearbeitung Stand der Technik ist.

Es ist günstig, für die Form einen Werkstoff auszuwählen, der eine hohe Wärmeleitfähigkeit (> 50 W/mK, besonders bevorzugt > 100 W/mK) besitzt, da die Form dann eine sehr homogene Temperaturverteilung aufweist und es durch die unterschiedlich intensive Bestrahlung der verschiedenen Flächen nicht zur Ausbildung zu heißer oder zu kalter Stellen kommen kann. Geeignete Werkstoffe sind in dieser Hinsicht beispielsweise Kupfer oder Aluminium.

Insbesondere im Fall einer beschichteten Form ist es zumeist erforderlich, diese zu kühlen, da sonst (durch die hohe Reflektivität nicht sofort, jedoch bei längeren beziehungsweise häufigen Beheizungszyklen langsam) die Formtemperatur einen Wert erreicht, bei dem die Beschichtung zerstört wird. Auch die Materialeigenschaften des Grundwerkstoffs begrenzen die zulässige Formtemperatur, so daß auch bei unbeschichteten Formen gegebenenfalls eine Kühlung erforderlich wird. Eine Kühlung der Form erfolgt vorzugsweise mit Wasser. Dabei darf die eingestellte Formtemperatur jedoch einen materialabhängigen Wert nicht unterschreiten, da sonst die zur Verformung erforderliche Temperatur des auf der Form aufliegenden Glases nicht mehr erreicht wird. Um dies zu erreichen wird erfindungsgemäß vorgesehen, die Kühlvorrichtung und die Form als zwei getrennte Bauteile auszuführen, zwischen die gegebenenfalls ein weiteres Bauteil als definierter Wärmewiderstand eingebracht werden kann, so daß hierdurch die gewünschte Formtemperatur eingestellt werden kann, während die Kühlvorrichtung eine Temperatur nahe der Raumptemperatur besitzt.

Bei der Kühlung der Form kann das folgende Problem auftreten: Die relativ kalte Form entzieht dem umzuformenden Körper Wärme. Dies kann dazu führen, daß die Glastemperatur unterhalb des für die Umformung notwendigen Wertes bleibt. Dies ist beispielsweise bei der Umformung einer ebenen Glasplatte zu einer Backschale sehr nachteilig. Die ebene Platte wird dabei auf die Form aufgelegt, so daß die Platte auf einem Umfangsbereich mit der Form in Kontakt steht, während die Glasplatte im inneren Bereich frei von Formkontakt ist. Auf diese Weise stellt sich ein Temperaturgradient zwischen dem Glas im Kontaktbereich und dem Glas innerhalb dieses Bereiches ein. Die notwendige Umformtemperatur liegt daher auch im Übergangsbereich der Glasplatte nicht vor. Damit ist es nicht möglich, die Platte getreu der verwendeten Form umzuformen.

Dieses Problem wird gemäß einem weiteren Gedanken der Erfindung dadurch gelöst, daß Maßnahmen getroffen werden, um den örtlichen Wärmeentzug, den die Form auf den Körper ausübt, in den Bereichen hohen Umformungsgrades des Körpers zu minimieren.

Es kann auch dann vorteilhaft sein, die genannten Maßnahmen zu treffen, wenn die Form nicht eigens gekühlt wird. Ein örtlicher Wärmeentzug durch das auszuformende Material kann nämlich an gewissen Stellen der Form auch sonst auftreten.

Die genannten Maßnahmen lassen sich auf verschiedene Weise verwirklichen. Die einfachste Maßnahme besteht darin, die Form im Bereich des hohen Umformungsgrades mit einer Aussparung zu versehen, so daß in diesem Bereich kein Kontakt zwischen der formgebenden Fläche und der dieser Fläche zugewandten Fläche des umzuformenden Körpers herrscht. Dem gemäß tritt dort auch kein Wärmeentzug auf. Die Temperatur des umzuformenden Körpers erreicht den zur Umformung notwendigen Wert.

Es sind auch andere Maßnahmen möglich, so kann beispielsweise die Kühlung der Form derart gestaltet werden, daß gerade die betroffenen Bereiche hohen Umformungsgrades weniger oder gar nicht gekühlt werden, und daß demgemäß dem umzuformenden Körper in diesen Bereichen auch weniger oder gar keine Wärme durch die Form entzogen wird.

Die Erfindung ist anhand der Zeichnung näher erläutert. Darin ist im einzelnen folgendes dargestellt:
- Figur 1: zeigt in schematischer Darstellung in einem Vertikalschnitt eine erfindungsgemäße Vorrichtung.
- Fig. 2 - 6: veranschaulichen den Ablauf eines Umformungsprozesses bei der Herstellung einer Backschale.

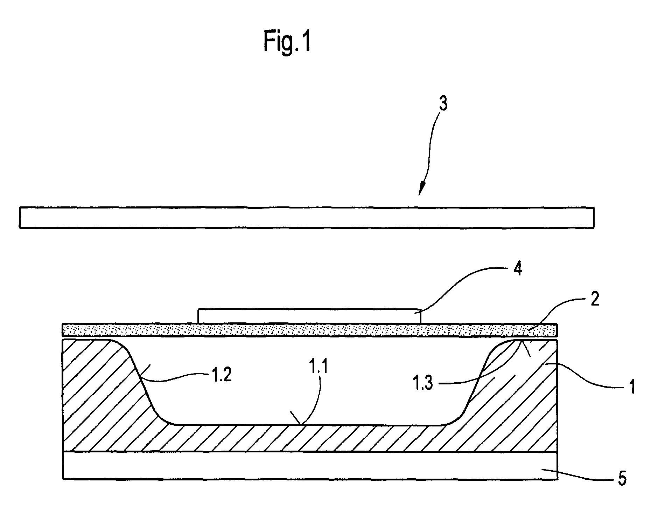

In Figur 1 erkennt man im einzelnen eine Form 1 zum Herstellen einer Backschale. Die Form 1 weist eine formgebende Fläche auf, umfassend eine Bodenfläche 1.1, die im vorliegenden Falle horizontal verläuft, eine Flankenfläche 1.2 sowie eine Auflagefläche 1.3. Die Form 1 besteht in vorliegendem Falle aus einem Metall, das eine Reflektivität von 90 % besitzt. Außerdem ist die Wärmeleitfähigkeit sehr hoch. Dies hat den Vorteil, daß es in der Form zu einer homogenen Temperaturverteilung kommt, was sich günstig auf die Qualität des herzustellenden Produktes auswirkt.

Auf die Form 1 ist eine Glasscheibe 2 aufgelegt. Die Glasscheibe 2 ist genau wie die Form 1 in Draufsicht von rechteckiger Gestalt. Die Glasscheibe 2 ruht somit mit ihren Umfangsbereichen auf der Auflagefläche 1.3 der Form 1.

Ein wichtiges Element ist eine Heizeinrichtung 3. Dabei handelt es sich um eine kurzwellige Infrarot-Strahlungseinrichtung mit einer Farb-Temperatur von 2500 K. Die Glasscheibe 2 hat eine Dicke von 3,7 mm und eine Breite von 250 mm. Sie befindet sich in einem Abstand von 55 mm von den Strahlern der Heizeinrichtung 3. Der Abstand zur Bodenfläche 1.1 der Form 1 beträgt 25 mm. Die Region in der Scheibenmitte ist durch eine Quarzalplatte 4 gegen die Strahlung abgeschirmt. Hierdurch wird verhindert, daß dort das Glas zu sehr erweicht, was zu sogenannter Pitbildung führen kann.

Die Form 1 ist gekühlt. Zu diesem Zwecke ruht sie auf einer Kühleinrichtung 5. Dabei handelt es sich um einen von Wasser durchströmten Kasten. Die Form 1 ruht lose auf der Kühleinrichtung 5. Hierdurch ist der Wärmeübergang relativ gering.

Die Form weist außerdem hier nicht dargestellte Saugbohrungen auf, die an der formgebenden Fläche 1.1, 1.2, 1.3 münden. An die Saugbohrungen läßt sich ein Unterdruck anlegen, so daß die durch die Heizeinrichtung 3 erweichte Glasplatte an die formgebende Fläche herangezogen werden kann.

Die Glasplatte 2 wird zu Beginn des Prozesses eine Anfangstemperatur von 600 Grad Celsius erwärmt. Die Form 1 ist auf 250 Grad Celsius erwärmt. Das in der Kühleinrichtung 5 strömende Kühlwasser hat Raumtemperatur. Die Leistung der Strahler beträgt 50 kW. Das Vakuum wird an den genannten Saugbohrungen dann angelegt, wenn die Temperatur der Glasplatte 2 im Bereich der Biegekante zwischen der Flankenfläche 1.2 und der Auflagefläche 1.3 einen Wert von mehr als 800 Grad Celsius erreicht hat.

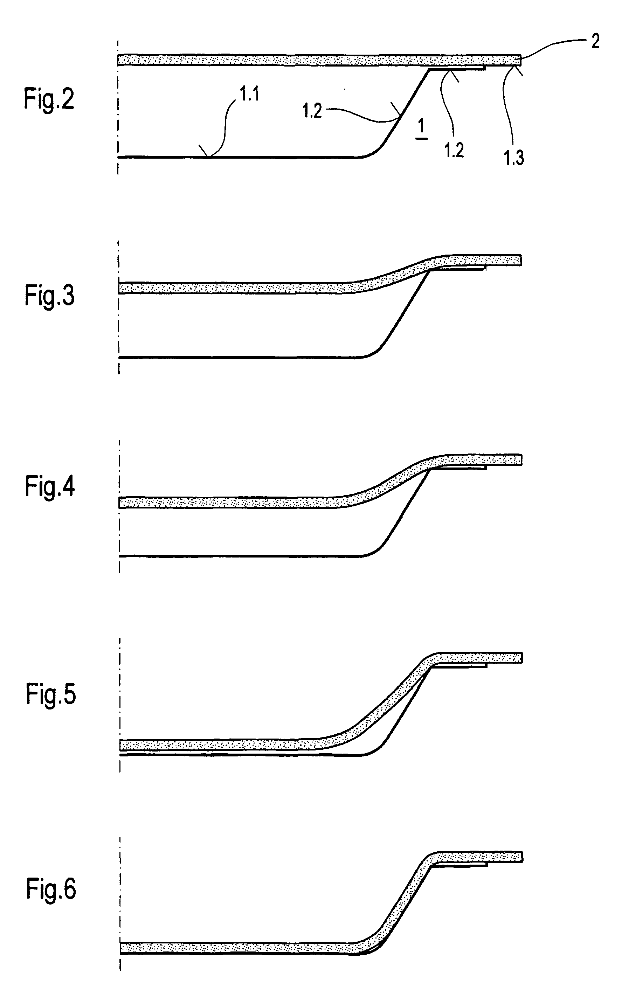

Die Figuren 2 bis 6 veranschaulichen einzelne Phasen des Umformungsprozesses der in Figur 1 dargestellten Glasplatte 2.

Eine wichtige Einzelheit ist besonders gut aus Figur 2 erkennbar. Dort sind wiederum die Bodenfläche 1.1, die Flankenfläche 1.2 und die Auflagefläche 1.3 dargestellt. Jedoch ist die Auflagefläche 1.3 bearbeitet, und zwar ist sie mit einer Aussparung versehen, so daß eine abgesenkte Fläche 1.4 entsteht, die natürlich ebenfalls um die Form 1 herumläuft. Nach Auflegen der Glasplatte 2 auf die Form 1 beziehungsweise auf deren Auflagefläche 1.3 herrscht somit ein freier Zwischenraum zwischen der abgesenkten Fläche 1.4 und der unteren Fläche der Glasplatte 2. Dies bedeutet, daß zwischen der Glasplatte 2 und der Form 1 in diesem Bereich kein Kontakt besteht. Demgemäß wird dort auch der Glasplatte 2 keine Wärme entzogen. Die Glasplatte 2 behält die notwendige Temperatur bei, die sie durch die Heizeinrichtung 3 erhält. Diese Temperatur erreicht den zur Umformung notwendigen Wert.

Figur 3 zeigt jenen Zustand, bei welchem die Glasplatte erweicht und aufgrund ihres Eigengewichtes in ihrem mittleren Bereich etwas eingesackt ist.

Figur 4 zeigt einen Zustand, bei welchem zusätzlich zu der Wirkung des Eigengewichtes eine Saugkraft durch die genannten Saugbohrungen aufgebracht ist.

Figur 5 zeigt ein nachfolgendes Stadium.

Bei Figur 6 ist der Endzustand fast erreicht. Die Glasplatte 2 liegt nunmehr fast vollständig an der formgebenden Fläche der Form 1 an.

Bei einem praktischen Ausführungsbeispiel beträgt der senkrechte Abstand zwischen der Auflagefläche 1.3 und der abgesenkten Fläche 1.4 1 mm. Geringere oder größere Werte sind denkbar, beispielsweise 0,5 bis 7 mm.

Die abgesenkte Fläche 1.4 hat eine Länge von einigen Millimetern, hier in horizontaler Richtung gemessen. Optimale Längen dieser abgesenkten Fläche liegen bei 5 bis 20 mm, vorzugsweise bei 10 bis 15 mm.

## Patentansprüche

1. Verfahren zum Umformen von Körpern (2) aus Glas oder Glaskeramik zur Herstellung eines dreidimensionalen Endproduktes, mit den folgenden Verfahrensschritten:
der Körper (2) wird auf eine formgebende Form (1) aufgelegt und mittels kurzwelliger IR-Strahlung (3) beheizt und umgeformt;
als Material der Form (1) wird ein Werkstoff hohen Reemissionsgrades oder hoher Reflektivität ausgewählt, **dadurch gekennzeichnet daß**,
zur Verringerung des örtlichen Wärmeentzuges, den die Form (1) auf den Körper (2) ausübt, zwischen einer den Körper (2) tragenden Auflagefläche (1.3) und einer innerhalb der Auflagefläche angeordneten und gegen diese geneigten Flankenfläche (1.2) eine Aussparung vorgesehen ist, deren Boden aus einer abgesenkten Fläche (1.4) gebildet ist.

2. Vorrichtung zum Umformen eines Körpers (2) aus Glas oder Glaskeramik zur Herstellung eines dreidimensionalen Endproduktes, mit den folgenden Merkmalen:
mit einer formgebenden Form (1);
mit einer kurzwelligen IR-Heizeinrichtung zum Aufheizen des Körpers (2);
das Material der Form (1) weist wenigstens im Bereich der formgebenden Fläche einen hohen Reemissionsgrad oder eine hohe Reaktivität auf **dadurch gekennzeichnet daß**,
zur Minimierung des örtlichen Wärmeentzuges, den die Form (1) auf den Körper (2) ausübt, zwischen einer den Körper (2) tragenden Auflagefläche (1.3) und einer innerhalb der Auflagefläche angeordneten und gegen diese geneigten Flankenfläche (1.2) eine Aussparung vorgesehen ist, deren Boden aus einer abgesenkten Fläche (1.4) gebildet ist.

3. Vorrichtung nach Anspruch 2, **dadurch gekennzeichnet, daß** die Form (1) in den Bereichen hohen Umformungsgrades des Körpers (2) gegen Wärmeentzug isoliert ist.

4. Vorrichtung nach Anspruch 3, **dadurch gekennzeichnet, daß** die Form (1) auf einer separaten Kühleinrichtung (5) ruht, die von einem Kühlmedium, vorzugsweise Wasser, durchströmt ist.

5. Vorrichtung nach einem der Ansprüche 2 bis 4, **dadurch gekennzeichnet, daß** die formgebende Fläche der Form (1) aus einer metallischen Beschichtung gebildet ist.

6. Vorrichtung nach Anspruch 5, **dadurch gekennzeichnet, daß** die Form (1) aus Metall besteht.

7. Vorrichtung nach einem der Ansprüche 2 bis 6, **dadurch gekennzeichnet, daß** die Reflektivität der formgebenden Fläche wenigstens 80, vorzugsweise wenigstens 90 % beträgt.

8. Vorrichtung nach Anspruch 7, **dadurch gekennzeichnet, daß** wenigstens die formgebende Fläche der Form aus einem Quarzgut besteht.

9. Vorrichtung nach Anspruch 8, **dadurch gekennzeichnet, daß** das Quarzgut einen Reemissionsgrad von wenigstens 90 %, vorzugsweise 95 % aufweist.

## Claims

1. A method for forming bodies (2) made of glass or glass ceramics for producing a three-dimensional finished product, comprising the following method steps:
the body (2) is placed on a forming mold (1) and is heated by means of short-wave IR radiation (3) and formed;
a material with a high degree of re-emission or high reflectivity is chosen as material of the mold (1), **characterized in that**
for reducing the local heat absorption which is exerted by the mold (1) on the body (2) a cavity is provided between a bearing surface (1.3) carrying the body and a flank surface (1.2) which is arranged within the bearing surface and is inclined against the same, with the floor of said cavity being formed by a lowered surface (1.4).

2. An apparatus for forming a body (2) made of glass or glass ceramics for producing a three-dimensional finished product, with the following features:
with a forming mold (1);
with a short-wave IR heating device for heating the body (2);
the material of the mold (1) has a high degree of re-emission or high reflectivity at least in the region of the forming surface, **characterized in that** for reducing the local heat absorption which is exerted by the mold (1) on the body (2) a cavity is provided between a bearing surface (1.3) carrying the body and a flank surface (1.2) which is arranged within the bearing surface and is inclined against the same, with the floor of said cavity being formed by a lowered surface (1.4)

3. An apparatus according to claim 2, **characterized in that** the mold (1) is insulated against heat absorption in regions of high degrees of forming of the body (2).

4. An apparatus according to claim 3, **characterized in that** the mold (1) rests on a separate cooling device (5) which is flowed through by a cooling medium, preferably water.

5. An apparatus according to one of the claims 2 to 4, **characterized in that** the forming surface of the mold (1) is formed by a metallic coating.

6. An apparatus according to claim 5, **characterized in that** the mold (1) consists of metal.

7. An apparatus according to one of the claims 2 to 6, **characterized in that** the reflectivity of the forming surface is at least 80%, preferably less than 90%.

8. An apparatus according to claim 7, **characterized in that** at least the forming surface of the mold consists of a quartz material.

9. An apparatus according to claim 8, **characterized in that** the quartz material has a degree of re-emission of at least 90%, preferably 95%.

## Revendications

1. Procédé pour la mise en forme de masses (2) de verre ou de vitrocéramique pour la fabrication d'un produit fini tridimensionnel, comprenant les étapes de procédé suivantes :
la masse (2) est posée sur un moule (1) créant la forme, chauffée au
moyen d'un rayonnement infrarouge à ondes courtes (3) et mise en forme ;
le matériau du moule (1) est un matériau à fort taux de réémission ou à
forte réflectivité ;
**caractérisé en ce qu'**afin de réduire le retrait local de chaleur exercé par le moule (1) sur la masse (2), il est prévu entre une surface d'appui (1.3) pourtant la masse (2) et une surface de flanc (1.2) disposée à l'intérieur de la surface d'appui et inclinée vers celle-ci un évidement dont le fond est formé par une surface renfoncée (1.4).

2. Dispositif pour la mise en forme d'une masse (2) de verre ou de vitrocéramique pour la fabrication d'un produit fini tridimensionnel, comprenant les éléments suivants :
un moule (1) créant la forme ;
un dispositif de chauffage à infrarouges à ondes courtes pour le chauffage de la masse (2) ;
le matériau du moule (1) présentant au moins au niveau de la surface donnant la forme un fort taux de rémission ou une réflectivité,
**caractérisé en ce qu'**afin de minimiser le retrait local de chaleur exercé par le moule (1) sur la masse (2), il est prévu entre une surface d'appui (1.3) pourtant la masse (2) et une surface de flanc (1.2) disposée à l'intérieur de la surface d'appui et inclinée vers celle-ci un évidement dont le fond est formé par une surface renfoncée (1.4).

3. Dispositif selon la revendication 2, **caractérisé en ce que** le moule (1) est isolé contre les retraits de chaleur dans les zones de forte déformation de la masse (2).

4. Dispositif selon la revendication 3, **caractérisé en ce que** le moule (1) repose sur une installation de refroidissement (5) séparée parcourue par un fluide de refroidissement, de préférence de l'eau.

5. Dispositif selon l'une quelconque des revendications 2 à 4, **caractérisé en ce que** la surface du moule (1) créant la forme est formée par un revêtement métallique.

6. Dispositif selon la revendication 5, **caractérisé en ce que** le moule (1) se compose de métal.

7. Dispositif selon l'une quelconque des revendications 2 à 6, **caractérisé en ce que** la réflectivité de la surface créant la forme est au moins de 80 %, de préférence au moins de 90 %.

8. Dispositif selon la revendication 7, **caractérisé en ce que** la surface du moule créant la forme au moins est composée de silice vitreuse.

9. Dispositif selon la revendication 8, **caractérisé en ce que** la silice vitreuse possède un taux de réémission de 90 % au moins, de préférence 95 %.
